# DEMANDE DE BREVET EUROPEEN

(11) **EP 2 293 228 A1**
(43) Date de publication de la demande: **09.03.2011**
(21) Numéro de dépôt: 09305796.6
(22) Date de dépôt: 28.08.2009
(51) Int. Cl.: G06K 19/077

(54) **Procédé de réalisation d'un dispositif comprenant un circuit radiofréquence, dispositif obtenu et module pour la mise en oeuvre du procédé**

(71) Demandeur: Gemalto SA, 92190 Meudon (FR)
(72) Inventeur: Buyukkalender, Arek, 13013 Marseille (FR); Lahoui, Nizar, 13400 Aubagne (FR); Gaspari, Sébastien, 13005 Marseille (FR)

(57) **Abrégé**

Procédé de réalisation d'un dispositif comprenant un circuit radiofréquence, dispositif obtenu et module pour la mise en oeuvre du procédé.

L'invention concerne un procédé de réalisation d'un dispositif comprenant un microcircuit de transpondeur radiofréquence RF. Le procédé se distingue en ce qu'il comprend les étapes suivantes :
- réalisation d'un module (20, 20a, 40, 43) comportant au moins une première (21, 22) et seconde paire (21s, 22s) de plages de contact, le microcircuit (23) connectant une première paire (21, 22) de plages de contact,
- connexion d'un composant supplémentaire (C, 23, 23b) à la seconde paire (21 s, 22s) de plages de contact,
- connexion d'une antenne commune (24, 32) ou d'une antenne dédiée (24r, 38, 24d) à chaque composant.

L'invention concerne également le module et dispositif résultant.

## Description

L'invention concerne le domaine des dispositifs de communication radiofréquence. Elle concerne plus particulièrement un procédé de réalisation d'un dispositif comprenant un circuit de transpondeur radiofréquence, le dispositif obtenu et un module pour la mise en oeuvre du procédé.

Les dispositifs visés comprennent notamment des cartes sans contact, des passeports électroniques, des inserts radiofréquences (inlays), des étiquettes électroniques, des clés USB, tout produit ou dispositif comportant un microcircuit ayant une fonction radiofréquence et étant relié à une antenne.

Parmi les procédés de fabrication de ces dispositifs, il est connu de fournir un module comportant une puce de circuit intégré comportant la fonction radiofréquence et connectée à des plages de contact du module. Le module est ensuite connecté à une antenne pour former un transpondeur radiofréquence. Ce transpondeur peut être conditionné de différentes manières pour former un produit final ou intermédiaire comme un insert (inlay), destiné à être inséré dans des produits, tels qu'une carte à puce, un passeport électronique notamment par lamination de feuilles autour du transpondeur.

Selon l'application visée, bancaire, identité, passeport, carte à double puce radiofréquence, dispositif amplifié avec antenne relais ou pas, il convient d'effectuer des opérations de fabrication ci-après. Il convient notamment de sélectionner la puce de circuit intégré qui comporte généralement une capacité interne inhérente au circuit radiofréquence, puis de choisir un parcours d'antenne adapté pour obtenir un accord de fréquence du transpondeur en fonction de la puce et de la surface disponible de manière à satisfaire des contraintes notamment de performances de la norme en vigueur telle que l'ISO 14443, ISO 15693 ou ISO18092, ISO21481, etc.

Dans certains cas, le dispositif peut comprendre deux puces connectées à une même antenne (dispositif multi-application) ; Parfois l'antenne doit être conçue de dimensions suffisantes pour présenter les performances escomptées, ou parfois encore, la communication doit être amplifiée avec une antenne relais.

Ainsi, la conception d'un dispositif radiofréquence est assez complexe selon les applications ou agencement d'antennes.

L'art antérieur comporte le brevet Gemplus FR2777141 (B1) illustré à la figure 1. Ce brevet vise plutôt des transpondeurs de type étiquette électronique dans lequel l'antenne relais comporte un condensateur sous forme de plaques gravées à la surface du substrat selon la même technologie que celle employée pour réaliser l'antenne. Les plaques sont disposées de part et d'autre du substrat.

Les performances de ce transpondeur sont limitées par rapport à celles visées. Ce document ne semble pas être configuré pour satisfaire la norme ISO 14443-2.

Par ailleurs, on connaît, le brevet n° EP1031939 (B1) illustré à la figure 2. Il décrit un perfectionnement pour carte à puce sensé satisfaire l'ISO 14443-2. La carte requiert deux antennes sur deux supports distincts, une antenne de transpondeur sur un module (2) et une antenne relais (4, 3) réalisée en deux parties sur un substrat 5 qui comprend une antenne centrée sur celle du module et connectée à une antenne périphérique. La capacité est réalisée par des plaques de condensateur s'étendant sur une partie du substrat.

Ce transpondeur est trop complexe et trop encombrant. Il requiert deux supports pour les antennes, comprend l'antenne relais en deux parties (3, 4), une concentrique à l'antenne du transpondeur et une autre définissant une surface de couplage radiofréquence sensiblement égale à la surface de la carte.

En outre, il requiert toute la surface de la carte à puce au format ISO ID1 des cartes à puce (54 x 85,6 mm).

On connaît également le brevet EP1267303 (A1) illustré à la figure 3. Il permet à deux puces radiofréquences différentes de fonctionner alternativement selon le type de lecteur avec une même antenne. Les puces sont sur deux modules, connectés à une antenne commune. Le procédé décrit dans ce document a l'inconvénient de requérir deux modules, d'être onéreux et d'engendrer des problèmes d'encombrement.

L'invention a pour objet de résoudre ces inconvénients.

L'invention a pour objectif de faciliter la conception et réalisation de dispositif radiofréquence et/ou d'améliorer des communications radiofréquences et/ou de diminuer l'encombrement des transpondeurs radiofréquences. En particulier, elle vise de préférence à améliorer la portée et la qualité de communication de dispositif radiofréquence tout en ayant un encombrement réduit.

Le principe de l'invention consiste à concevoir un module à usage multiple selon l'application et configuration structurelle retenue du transpondeur.

Dans un premier mode remarquable de réalisation, on connecte une puce radiofréquence supplémentaire sur le module et dans un autre mode remarquable, on connecte une capacité sous forme de puce de circuit intégré notamment.

L'invention a d'abord pour objet un procédé de réalisation d'un dispositif comprenant un circuit de transpondeur radiofréquence. Le procédé se distingue en ce qu'il comprend les étapes suivantes :
- réalisation d'un module comportant au moins une première et seconde paire de plages de contact, le microcircuit RF connectant une première paire de plages de contact,
- connexion d'un composant supplémentaire à la seconde paire de plages de contact,
- connexion d'une antenne commune ou d'une antenne dédiée à chaque composant.

Selon d'autres caractéristiques du procédé :
- Ladite connexion d'antenne commune s'effectue par l'intermédiaire de deux connexions successives de chaque extrémité d'antenne à une plage de chaque paire de plages de contact ;
- Le second composant est une capacité externe.

Grâce à l'ajout d'une capacité au microcircuit RF, l'invention offre de la souplesse dans la conception de dispositifs performants quelle que soit la qualité ou performance de la puce. Elle permet de réaliser des dispositifs plus compacts à performance égale et avec moins d'étapes.

L'invention a également pour objet un dispositif comprenant un circuit de transpondeur radiofréquence ; le dispositif se distingue en ce que le circuit comprend un module comportant au moins une première et seconde paire de plages de contact, le microcircuit RF1 étant connecté à une première paire de plages de contact, un composant supplémentaire sur ledit module, ledit composant étant connecté à une seconde paire de plages de contact, une connexion de chaque composant à une antenne commune ou à une antenne dédiée.

Selon d'autres caractéristiques du dispositif :
- Le second composant est un second microcircuit radiofréquence ;
- Le second composant est une capacité externe ;
- L'antenne reliée à la capacité est dimensionnée de manière à présenter une surface de couplage sensiblement inférieure ou égale à une demi surface de carte à puce au format ISO ID1 et à satisfaire la norme ISO 14443 ;
- L'antenne reliée au microcircuit RF présente une surface de couplage supérieure ou égale à 10 x 23 mm et l'antenne reliée à la capacité présente une surface de couplage comprise environ entre 20 x 28 mm (528 mm2) et une demi surface (43 x 27 mm) de carte à puce au format ID1 (85,6 x 54 mm) ;
- Les deux antennes sont sensiblement centrées ou positionnées l'une à l'intérieur de l'autre.

L'invention a également pour objet un module pour dispositif de transpondeur radiofréquence, ledit module comportant une première paire de plages de contact destinées à connecter ou connectant un microcircuit radiofréquence et une antenne radiofréquence ;
Le module se distingue en ce qu'il comporte au moins une seconde paire de plages de contact supplémentaire destinée à connecter ou connectant un composant supplémentaire fixé sur le module, une connexion ou emplacement de connexion de chaque composant à une antenne commune ou à une antenne dédiée.

Un avantage remarquable du module à au moins 4 plages de connexion réside notamment dans plus de souplesse pour l'ajustement de la capacité d'accord grâce à des valeurs normalisées contrairement à la technologie de l'art antérieur à plaques gravées qui demande plus de surfaces et encombrement pour augmenter la capacité.

Un autre avantage de l'invention réside dans les moyens de le mettre en oeuvre ; en effet, l'invention ne requiert aucune étape supplémentaire ou technologie différente de celles qu'on utilise aujourd'hui dan le domaine de la carte à puce.

L'invention offre en plus la possibilité d'ajuster facilement les performances radiofréquences RF sur les petites antennes quelle que soit la puce et ses caractéristiques de performances et/ou de capacité interne.

Elle offre également la possibilité d'utiliser une puce supplémentaire pour permettre notamment des migrations ou évolution de systèmes vers cette puce ou d'autres applications supplémentaires.

D'autres particularités et avantages de l'invention apparaîtront à la lecture de la description, faite à titre d'exemple non limitatif et en regard des dessins annexés sur lesquels :
- La figure 1 illustre un transpondeur avec antenne relais selon l'art antérieur ;
- La figure 2 illustre une carte avec antenne relais selon l'art antérieur ;
- La figure 3 illustre une carte avec une antenne partagée par deux puces radiofréquences selon l'art antérieur ;
- Les figures 4 et 5 illustrent deux modules selon deux modes de réalisation de l'invention en cours de montage;
- Les figures 6 et 7 illustrent les modules précédents enrobés.
- La figure 8 illustre un dispositif radiofréquence selon un mode de réalisation de l'invention ;
- La figure 9 illustre un dispositif radiofréquence selon un autre mode de réalisation de l'invention ;
- La figure 9a illustre un agrandissement du module de la figure précédente ;
- La figure 10 illustre un dispositif radiofréquence optimisé en surface ou encombrement selon un second mode de mise en oeuvre ou d'utilisation de l'invention ;
- La figure 10a illustre un agrandissement du module de la figure précédente en vue de dessous ;
- La figure 11 a illustre un agrandissement du module de la figure 9 selon un troisième mode d'utilisation en ayant un second microcircuit radiofréquence 23b en remplacement de la capacité C (ou le cas échéant en plus) ;
- La figure 12 illustre un quatrième mode utilisation du module avec des antennes dédiées à chaque composant RF ;
- La figure 13 illustre un autre mode de réalisation du module et un cinquième mode d'utilisation de celui-ci avec des zones de court-circuit et zones de séparation.

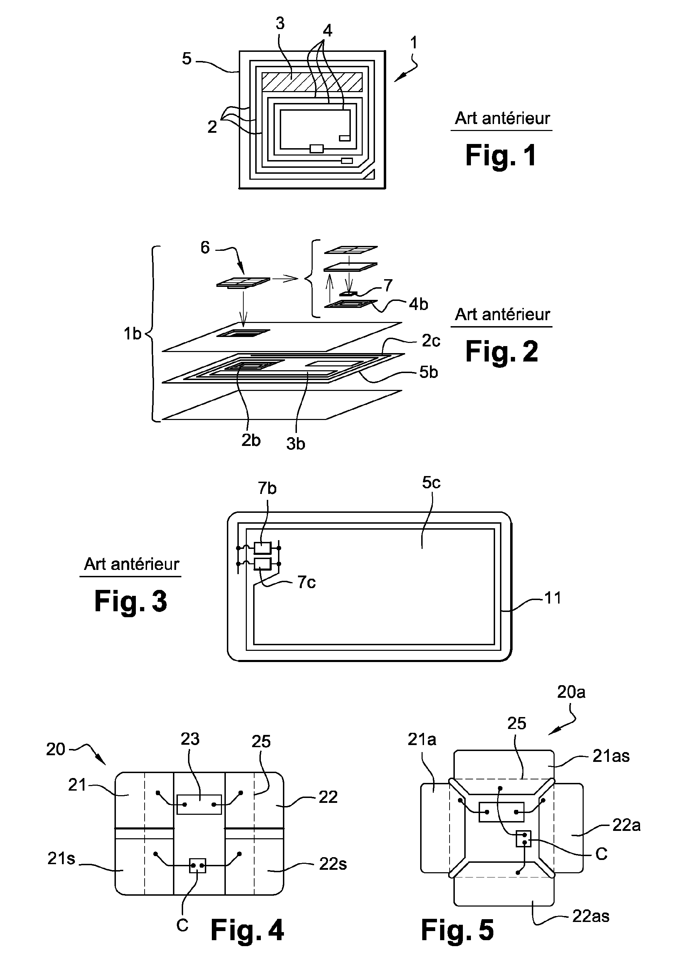

A la figure 1, selon l'art antérieur, un transpondeur de type étiquette électronique 1 comporte une antenne relais 2 associée reliée à un condensateur 3 sous forme de plaques gravées sur un substrat 5. L'antenne relais est disposée autour de l'antenne 4 de transpondeur.

A la figure 2, selon un autre art antérieur, une carte à puce sans contact 1 b requiert deux antennes sur deux supports distincts : une antenne de transpondeur 4 sur un module 6 relié à un microcircuit radiofréquence 7 et une antenne relais (2b, 2c) réalisée en deux parties sur un substrat 5b qui comprend une antenne 2b centrée sous celle du module 6 et connectée à une antenne périphérique 2c. La capacité 3b est réalisée par des plaques de condensateur s'étendant sur une grande partie du substrat 5b.

La figure 3, une carte à puce sans-contact comprend deux puces radiofréquences différentes 7 b, 7c. Les puces sont sur deux modules, connectés à une antenne commune 11 portées par un substrat 5c.

A la figure 4, on voit un module 20 pour dispositif de transpondeur radiofréquence conforme à un mode de réalisation de l'invention. Le module comporte une première paire de plages de contact 21, 22 de part et d'autre des côtés latéraux du module. Les plages connectent un microcircuit radiofréquence 23. Les plages de contact sont destinées à connecter une antenne radiofréquence 24. Ici, le microcircuit est monté, connecté et enrobé dans une résine de protection rectangulaire 25 notamment par surmoulage qui protège la puce et les connexions. Le module peut comprendre un substrat isolant 26 portant les plages de contact électrique.

Dans un mode d'utilisation, le module comporte une capacité 27 reliée en parallèle au microcircuit. Selon ce mode de réalisation, le module comporte au moins une seconde paire de plages de contact supplémentaire 21 s, 22s destinée à connecter ou connectant un composant supplémentaire fixé sur le module ; Ici, le composant est également connecté et conditionné comme précédemment.

Dans une variante, le module comporte deux plages de contact seulement pour relier une antenne, un microcircuit RF et une capacité. L'inventeur a constaté que le module pouvait accueillir une nouvelle forme de capacité miniature (en circuit intégré) et améliorer ainsi les performances d'un transpondeur radiofréquence.

Selon une caractéristique, le module comporte également une connexion ou emplacement de connexion de chaque composant à une antenne commune ou à une antenne dédiée. Ici dans l'exemple, le module est isolé prêt à être reporté et connecté à au moins une antenne.

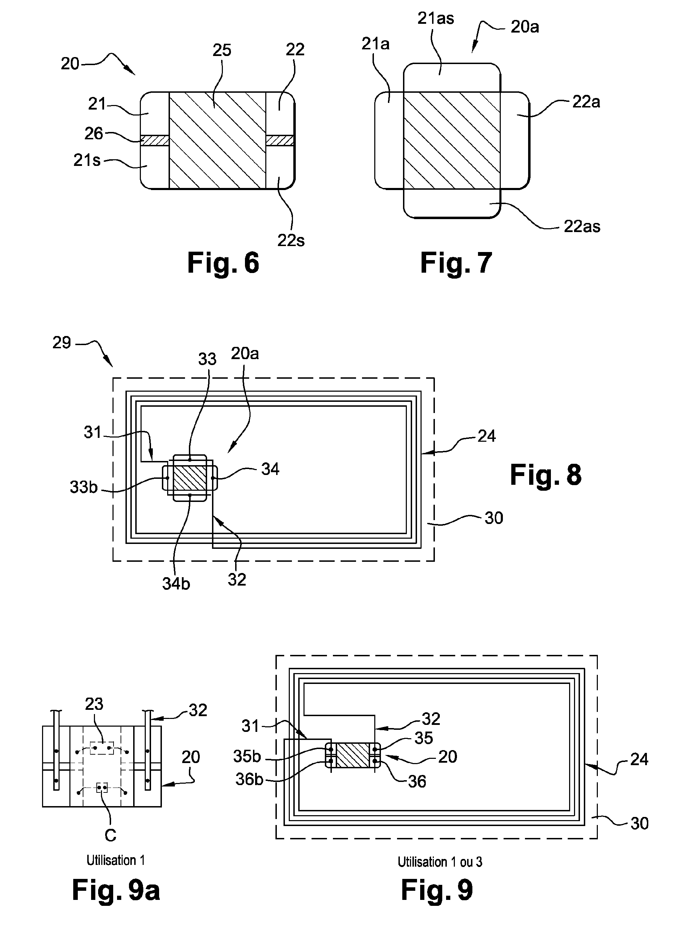

La figure 5 illustre un module 20a qui diffère de l'exemple précédent par le fait que les paires (21 a, 22a) et (21 as, 22as) sont réparties sur les quatre côtés du module de manière notamment à faciliter la connexion selon l'un des trois modes d'utilisation expliqués ultérieurement en relation avec les figures 9a, 10a, 11a, 12, 13. La même structure de module sera retenue quelle que soit l'application visée.

Le composant C est une capacité respectivement connectée à la paire de plages de contact inférieures 21s, 22s sur l'exemple de la figure 6 parallèlement aux connexions de la puce RF tandis que sur la figure 7, la capacité est connectée respectivement à la plage supérieure et inférieure 21 as, 22as sur le dessin en croisant la puce radiofréquence.

Les figures 6 et 7 correspondant respectivement aux figures 4 et 5 avec la résine d'enrobage en plus pour protéger les composants et les connexions.

A la figure 8, le module 20a de la figure précédente est connecté à une antenne 24 pour former un transpondeur radiofréquence 28 d'un dispositif radiofréquence 29 selon un premier mode d'utilisation du module. Le transpondeur 28 est inclus ou fixé à un substrat 30. L'antenne 24 comporte ses deux extrémités 31, 32 ou brins terminaux qui connectent chacune une plage de contact 21 a, 22as et 22a, 21 as de chaque paire de manière à avoir les deux composants (23, C) branchés en parallèle à l'antenne. Les brins terminaux 31, 32 de l'antenne forment respectivement un parcours sensiblement à angle droit entre deux points de connexion 33, 34 et 33b, 34b.

A la figure 9, les mêmes numéros concernent les mêmes éléments. Les brins terminaux 31, 32 subissent respectivement deux connexions successives 35b, 36b et 35, 36 le long des brins terminaux linéaires. Cette disposition permet de relier deux composants du module ensemble et en parallèle sur l'antenne par le biais de l'antenne.

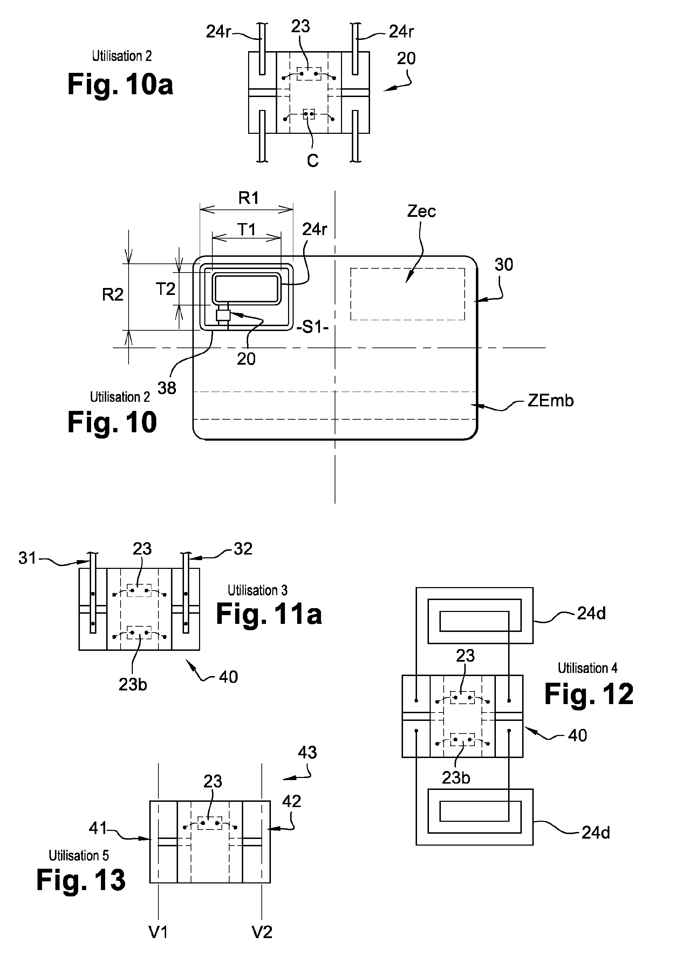

A la figure 10, selon un second mode d'utilisation du module, le dispositif 37 comporte cette fois une antenne relais 38 en plus de l'antenne de transpondeur 24tr qui lui permet d'amplifier le signal radiofréquence notamment dans des applications ou l'encombrement de l'antenne sur un substrat est réduit. L'invention vise notamment des cartes bancaires sans contact avec embossage, des mini-cartes bancaires sans-contact dont le format est divisé par deux par rapport au format ISO ID1, (85,6 x 54 mm) ou des clé USB satisfaisant la norme ISO 14443, etc.

A titre d'exemple, le dispositif de communication radiofréquence est une carte à puce de surface S1 représentant sensiblement un quart de la surface d'une carte ID1 (85,6 x 54 mm); La surface S1 peut être découpée ultérieurement ou demeurer ainsi dans un corps de carte au format normal ID1. L'avantage d'une telle carte est de libérer énormément de surface restante pour effectuer de l'embossage de caractère (carte bancaire) dans une zone ZEmb ou un hologramme, ou une perforation ou disposer d'autres composants comme un module afficheur encarté dans une zone « Zec ».

Ce second mode d'utilisation permet de réduire l'encombrement du transpondeur et/ou de libérer de la surface du corps de carte ou dispositif au profit d'autres fonctions ou composants.

Le dispositif comprend un transpondeur comportant un microcircuit radiofréquence relié à une antenne de transpondeur 38; L'antenne de transpondeur comporte une spire externe de transpondeur définissant à l'intérieur, une première surface de couplage électromagnétique minimale d'environ 200 mm ou 230 mm,

Dans l'exemple, les spires forment de l'ordre de 5 à 10 tours. L'antenne de transpondeur est comprise dans un rectangle d'environ T2 x T1 = 10 X 23 mm et l'antenne relais est comprise dans un rectangle d'environ R1 x R2 = 20 x 28 mm.

L'antenne relais 38 associée au transpondeur est positionnée sensiblement autour de l'antenne de transpondeur de manière à avoir la surface de couplage de l'antenne de transpondeur sensiblement en regard de celle de l'antenne relais. Dans cet exemple de réalisation, l'antenne de transpondeur et l'antenne relais comprennent de préférence chacune des portions ou brins terminaux d'antenne qui convergent jusqu'à une cavité dans le substrat ou sur un zone de connexion aux puces ou à un ou plusieurs modules communs sur le substrat.

La zone peut être aussi une zone de sectionnement ou d'enlèvement de matière sur le substrat et/ou de spire et de matière du substrat. La zone peut être aussi une zone de réception d'un ou plusieurs composant(s) ou module(s).

Ainsi, une combinaison du transpondeur et de l'antenne relais conforme notamment à cet exemple permet de réaliser un dispositif d'encombrement le plus réduit possible tout en étant conforme à l'ISO 14443. Le transpondeur résultant (comprenant l'antenne relais) présente une surface inférieure à un quart d'une surface de carte à puce au format ID1.

Ce module est également avantageux, car il permet de retenir des puces de circuit intégré radiofréquence aux performances moins élevées et moins chères aussi. Et en fait, il ouvre plus de choix dans les puces pouvant convenir à un même motif d'antenne. Cela permet notamment de mieux gérer les stocks et approvisionnement en insert (inlay) comportant une antenne. Le module est de type multi-usages et convient à des dispositifs simples ou multi-applications et/ou à des constructions multiples.

Ainsi, selon la qualité de la puce radiofréquence et le niveau de performance requis, l'invention permet pour des fonctionnalités sans-contact uniquement lorsque l'encombrement disponible est important, à utiliser une seule antenne de grande taille ; Par contre, dans le cas contraire où la surface disponible est réduite, l'invention permet d'ajouter une antenne relais 24r connectée à une capacité C résidant de préférence sur le même module et de réduire considérablement l'antenne de transpondeur et l'antenne relais jusqu'à 1/4 de surface voire environ 1/3 de surface ou demi-surface d'une carte à puce au format ID1 (85,6 X 54 mm).

De préférence, l'antenne relais entoure l'antenne reliée à la puce RF.

Grâce à une construction d'un module à applications / agencements multiples, l'invention permet également un gain de place dans l'intégration dans un substrat et une facilité de manipulation.

Il a été testé avec succès d'avoir des dimensions minimales d'antenne de transpondeur supérieures à 10 x 23 mm tandis que celles de l'antenne relais sont comprises entre environ 20 X 28 mm et une demi-surface de carte à puce autour de la seconde antenne pour permettre de satisfaire la norme ISO 14443.

Autrement dit, grâce à un module selon l'invention, il est possible de satisfaire à moindre coût la norme ISO 14443 indépendamment de la qualité et performance de la puce ou malgré un encombrement considérablement réduit par rapport à l'art antérieur.

Dans le cas où l'encombrement n'est pas réduit, l'invention permet de se contenter d'une antenne de grande dimension sur presque la totalité de la surface de la carte. On ajuste et améliore les performances en ajoutant une valeur de capacité C à celle déjà contenue, le cas échéant, dans la puce 23 via le composant supplémentaire. Des valeurs de capacité supplémentaire sont notamment de 27 pF ou supérieures notamment 34 pF selon le cas de nombre de spires.

Selon une troisième utilisation du module 40 conforme à l'invention (fig.11a), il est possible de connecter à la place de la capacité C sur les figures 9a et 10a, tout autre composant et en particulier une autre puce radiofréquence 23b. Cet autre composant peut être activable soit selon le type de lecteur radiofréquence, soit via un sélecteur, tel qu'un interrupteur (non représenté). Cette troisième utilisation diffère de la seconde utilisation essentiellement par le composant supplémentaire. Il est ici un deuxième microcircuit radiofréquence 23b.

A la figure 12, le module comporte deux microcircuits RF. La construction ici diffère de celui de la figure 11a en ce que chaque microcircuit est connecté à sa propre antenne 24d.

A la figure 13, toujours sur la base d'un même motif de module, l'invention prévoit un paire de plages de contact qui comporte au moins une portion sécable ou un court-circuit 41, 42 de manière à créer une paire de contacts supplémentaire en cas de besoin. Cela permet encore de prévoir avec un même motif de module plusieurs utilisation et/ou agencement antenne / composants.

Ce module 43 peut être notamment utilisé sans enlever le court-circuit 41, 42 lorsque le microcircuit RF est de bonne qualité et que l'antenne destinée à être connectée est une antenne de grand format. Le cas échéant, une capacité ou un autre composant peut être monté en parallèle. Une antenne peut être connectée aux deux composants via un seul point de connexion de ses portions terminales.

Par contre, en cas de puce RF de moindre qualité ou en cas d'encombrement disponible réduit, il est possible de libérer 2 plages de contact notamment en sectionnant le module selon les lignes V1, V2 (qui peuvent représenter des prédécoupes).

Le procédé de réalisation d'un dispositif comprenant un circuit de transpondeur radiofréquence conforme à un mode de réalisation est maintenant décrit ci-après. Il comprend les étapes ci-après. On réalise un module 20, comportant au moins une première et seconde paire de plages de contact, le microcircuit RF connectant une première paire de plages de contact. Le module est notamment obtenu par découpe d'un film continu portant des plages de contact, sur lequel est reporté et connecté un premier composant RF.

Ensuite, on procède à la connexion d'un composant supplémentaire à la seconde paire de plages de contact et on les enrobe d'une résine 25 notamment par surmoulage. Par la suite encore, on reporte le module sur un substrat tel qu'une feuille comportant une cavité de réception du module et comportant déjà une antenne et on effectue une connexion de l'antenne commune ou d'une antenne dédiée à chaque composant notamment par thermo compression.

Alternativement, le module est reporté dans une cavité d'un substrat, les plages étant du même côté qu'une face du substrat, puis on réalise l'antenne sur le substrat notamment par incrustation et connexion des extrémités par thermo compression ou ultrasons.

Le procédé de l'invention se distingue également en ce que l'on effectue deux connexions successives de chaque extrémité d'antenne à une plage de chaque paire de plages de contact.

Les résultats dans les tableaux ci-dessus ont été obtenues de manière à satisfaire l'ISO.

La norme ISO 14443-2 prévoit des valeurs de retro-modulation des transpondeurs compatibles supérieur ou égale à 18,4 mV pour un champ H de 1,5 A/m sur les deux bandes latérales de réponse du transpondeur. D'autre part, l'ensemble relais / transpondeur doit fonctionner dans un champ inférieur ou égal à 1, 5 A/m.

**Tableau 1**

| | | | ISO 14443-2 résultats avec puce SLE66CLX800PE (Infineon) | | | | | | | |
|---|---|---|---|---|---|---|---|---|---|---|
| Relais (13,56MHz) | | | Hmin (A/m) Transpondeur (21 MHz) en 26x10mm | | | | L/ M : Charge de Retro- Modulation (mV) avec 1,5 A/m avec un transpondeur en 26 x 10mm | | | |
| Surface (mm) | tours | C (pF) | 4 tours; C=56,6 pF | 5 tours; C=34 pF | 6 tours; C=18,5 pF | 7 tours; C=13 pF | 4 tours; C:56,6 pF | 5 tours; C:34 pF | 6 tours; C:18,5 pF | 7 tours; C:3 pF |
| 31x28 | 4 | 100 | 3,25 | 2,43 | 2,15 | 1,62 | - | - | - | - |
| 31x28 | 5 | 65 | 1,7 | 1,66 | 1,44 | 1,35 | - | - | 21,4 (LSB seul) | 23,75 |
| 31x28 | 6 | 49 | 1,9 | 1,46 | 1,35 | 1,23 | - | 22 (LSB seul) | 25,2 | 24,8 |
| 31x28 | 7 | 34,5 | 1,5 | 1,4 | 1,2 | 1,15 | 17,5 | 27,6 | 25,3 | 25,5 |
| 28x20 | 4 | 128 | 2,4 | 2,2 | 1,66 | 1,7 | - | - | - | - |
| 28x20 | 5 | 82 | 2,04 | 1,84 | 1,47 | 1,5 | - | - | 16,45 (LSB seul) | 16 (LSB seul) |
| 28x20 | 6 | 61 | 2,41 | 2,17 | 1,87 | 1,8 | - | - | - | - |
| 28x20 | 7 | 46,6 | 1,78 | 1,87 | 1,9 | 1,75 | - | - | - | - |

**Tableau 2**

| Surface de transpondeur modifié en 23 x 10 mm et 7 tours | | | | |
|---|---|---|---|---|
| | | | | |
| Dimensions relais (mm) | Tours relais | capacité (pF) | Hmin | L/M |
| 28x20 | 6 | 61 | 1,5 | 20/14 |
| 28x20 | 7 | 46,6 | 1,4 | 20,8 / 16,9 |
| 28x20 | 8 | 35 | 1,36 | 21,8 / 15,8 |
| 28x20 | 9 | 28 | 1,28 | 22,3 / 19,5 |

D'après ces résultats, les limites de surface de l'antenne relais conforme à l'ISO quasiment atteintes avec des dimensions de l'ordre de 20 x 28 mm ou légèrement inférieures (par exemple 10 %, 15 %)

Les antennes sont espacées de l'ordre de 200 µm aux endroits les plus rapprochés.

### Les fourchettes des caractéristiques de l'antenne relais pour demeurer conforme à l'ISO 14443-2, en particulier à 13, 56 Mhz:

- Dimensions externes ≥ à 20x28mm (maxi visé= 36,5 x 23mm soit ¼ de carte ID1 en enlevant les 2 mm de tolérance sur le contour pour la découpe au format)
- Nombre de tours ≥ 5 ; max=15
- Espace inter-spires (Pitch) mini ≥ 150µm (centre à centre);
- Diamètre fil ≥ 50 µm (pas de limitation en max)
- L ≥ 2 µH; max = 22µH
- R ≥ 2 Ohms ; max = 13 Ohms
- C ≥ 2 pF (dans le cas d'une antenne 12 tours, par exemple et de taille maxi ; pas de max avec cette technique.

Selon un autre mode de réalisation, le module est suffisamment grand pour pouvoir porter lui même une ou deux antennes. Il est par exemple, supérieur à un format réduit de 20 x 28 mm de manière à porter l'antenne relais d'antenne transpondeur réduits; Il peut aussi par exemple, être inférieur à un format égal à une demi-carte à puce au format ID1 (85,6 x54 mm). Cela peut être le cas d'un substrat réalisé notamment en circuit imprimé ou autre. L'antenne ou les antennes peuvent être connectées à des plages de contacts portées directement par le PCB.

Comme application de ce mode, l'invention peut être utilisée dans des dispositifs tels que clé USB comportant une fonction radiofréquence. Le cas échéant, le PCB peut porter d'autres composants, contrôleur, connecteurs, etc.

Le module peut par exemple avoir une capacité fixe sur deux plages de contact ou point de connexion à la surface du module. Il peut également avoir deux autres plages ou point de connexion à un microcircuit radiofréquence. Cette dernière connexion peut être amovible, la puce étant par exemple dans une carte à puce en relation de connexion avec le module. Là encore, il est avantageux de concevoir le module avec deux paires de connexions indépendantes ou pouvant le devenir, notamment par découpe.

### Autres Avantages :

Grâce à l'invention, il est aisé de procéder à l'intégration dans le module de fonctions qui seraient plus fragiles dans l'insert ou corps de carte.

En outre, l'invention permet de compléter la capacité de la puce radiofréquence et d'améliorer ainsi ses performances RF;

L'invention est particulièrement efficace pour éviter une perte de puissance de rétro-modulation de la puce lorsque l'antenne est de petit format.

L'invention permet de diminuer le nombre de tours de l'antenne (et la résistance R) et donc d'augmenter la rétro-modulation de la puce;

Grâce à l'invention, on satisfait plus aisément des certifications avec de petites antennes nettement inférieures au format ID1.

## Revendications

1. Procédé de réalisation d'un dispositif comprenant un microcircuit de transpondeur radiofréquence RF, **caractérisée en ce qu'**il comprend les étapes suivantes :
- réalisation d'un module (20, 20a, 40, 43) comportant au moins une première (21, 22) et seconde paires (21 s, 22s) de plages de contact, le microcircuit (23) connectant une première paire (21, 22) de plages de contact,
- connexion d'un composant supplémentaire (C, 23, 23b) à la seconde paire (21 s, 22s) de plages de contact,
- connexion d'une antenne commune (24, 32) ou d'une antenne dédiée (24r, 38, 24d) à chaque composant.

2. Procédé de réalisation selon la revendication précédente, **caractérisé en ce que** ladite connexion d'antenne commune (24, 32) s'effectue par l'intermédiaire de deux connexions successives (35, 36) de chaque extrémité d'antenne (31, 32) à une plage de chaque paire (21, 22), (21s, 22s) de plages de contact.

3. Procédé selon l'une des revendications précédentes, **caractérisé en ce que** le second composant est une capacité externe (C).

4. Dispositif comprenant un circuit de transpondeur radiofréquence, **caractérisé en ce que** le circuit comprend :
- un module (20, 20a, 40, 43) comportant au moins une première (21, 22) et seconde paires (21 s, 22s) de plages de contact, le microcircuit (23) étant connecté à une première paire de plages de contact
- un composant supplémentaire (C, 23, 23b) sur ledit module, ledit composant étant connecté à une seconde paire (21s, 22s) de plages de contact,
- une connexion de chaque composant à une antenne commune (24, 32) ou à une antenne dédiée (24r, 38, 24d).

5. Dispositif selon la revendication précédente, **caractérisé en ce que** le composant supplémentaire comprend un second microcircuit radiofréquence (23b, 23d).

6. Dispositif selon la revendication précédente, **caractérisé en ce que** le composant supplémentaire comprend une capacité externe (C).

7. Dispositif selon la revendication précédente, **caractérisé en ce que** l'antenne reliée à la capacité est dimensionnée de manière à présenter une surface de couplage à l'intérieur de la spire externe sensiblement inférieure ou égale à une demi-surface de carte à puce au format ISO ID1 et satisfaisant la norme ISO 14443.

8. Dispositif selon la revendication précédente, **caractérisé en ce que** l'antenne reliée au microcircuit radiofréquence (24tr) présente une surface de couplage environ supérieure ou égale à 10 x 23 mm et l'antenne reliée à la capacité présente une surface de couplage supérieure à environ 20 x 28 mm (528 mm2).

9. Dispositif selon la revendication précédente, **caractérisé en ce que** les deux antennes sont sensiblement centrées et/ou positionnées l'une à l'intérieur de l'autre.

10. Module pour dispositif de transpondeur radiofréquence, ledit module comportant une première paire (21, 22) de plages de contact destinées à connecter ou connectant un microcircuit radiofréquence (23) et une antenne radiofréquence (24), **caractérisé en ce qu'**il comporte :
- au moins une seconde paire (21s, 22s) de plages de contact supplémentaire destinée à connecter ou connectant un composant supplémentaire (23b, C),
- une connexion ou emplacement de connexion de chaque composant à une antenne commune (24) ou à une antenne dédiée (24r, 38, 24d)
